Europäisches Patentamt

European Patent Office

Office européen des brevets

(19)

(11) EP 0 823 077 B1

(12) EUROPÄISCHE PATENTSCHRIFT

(45) Veröffentlichungstag und Bekanntmachung des Hinweises auf die Patenterteilung:
07.04.1999 Patentblatt 1999/14

(21) Anmeldenummer: 97905039.0

(22) Anmeldetag: 17.02.1997

(51) Int Cl.⁶: $G05B\ 9/02$, G05D 1/00

(86) Internationale Anmeldenummer:
PCT/EP97/00748

(87) Internationale Veröffentlichungsnummer:
WO 97/31299 (28.08.1997 Gazette 1997/37)

(54) **VERFAHREN ZUM ÜBERWACHEN MEHRERER REGELKREISE DURCH STELLGRADÜBERWACHUNG**

PROCESS FOR MONITORING SEVERAL CONTROL CIRCUITS BY CONTROL RATIO MONITORING

PROCEDE DE CONTROLE DE PLUSIEURS CIRCUITS DE REGULATION PAR CONTROLE DU TAUX DE REGULATION

(84) Benannte Vertragsstaaten:
CH DE FR IT LI

(30) Priorität: 23.02.1996 DE 19606776

(43) Veröffentlichungstag der Anmeldung:
11.02.1998 Patentblatt 1998/07

(73) Patentinhaber:
• D.I.E.N.E.S. APPARATEBAU GMBH
D-63165 Mühlheim (DE)
• Zinser Textilmaschinen GmbH
D-73061 Ebersbach/Fils (DE)

(72) Erfinder:
• BROSSMER, Max
D-63454 Hanau (DE)
• GEHRMANN, Wolfgang
D-63454 Hanau (DE)
• LEHLE, Erhard
D-63165 Mühlheim (DE)
• STRAKA, Derrick
D-73037 Göppingen (DE)

(74) Vertreter: Rentzsch, Heinz, Dipl.-Ing.
Schönbornring 1
63263 Neu-Isenburg (DE)

(56) Entgegenhaltungen:
EP-A- 0 165 114          EP-A- 0 459 212

**Beschreibung**

Die Zuverlässigkeit von Regeleinrichtungen, speziell von Temperaturregeikreisen, hängt wesentlich von der einwandfreien Funktion der einzelnen Komponenten ab, welche den Regelkreis bilden, wie Istwertfühler, Regler und Stellglied. Die Funktionstüchtigkeit kann beispielsweise mit einem zweiten Meßkreis überwacht werden, bestehend aus einem zweiten Meßfühler, der an ein unabhängiges Istwertüberwachungsgerät angeschlossen wird. Beim Überschreiten des zulässigen Grenzwertes der Regelabweichung wird eine Alarmroutine ausgelöst. Solche redundante Überwachungssysteme sind allgemein im Einsatz. Sie stellen aber einen wesentlichen Kostenfaktor dar; vor allem wenn eine Vielzahl von gleichartigen Regelkreisen vorliegt, wie es beispielsweise bei der Temperaturregelung von Textilmaschinen wie Streckspul - oder Streckzwimmaschinen der Fall ist, wo mehrere hundert Temperaturregelstellen pro Maschine mit gleichem Temperatursollwert vorhanden sein können.

In US 4 707 310 A ist ein Regelverfahren mit den Merkmalen gemäß Oberbegriff des Anspruchs 1, allerdings ohne zusätzliche Überwachung der Regelkreise während der Betriebsphase, beschrieben. Es dient der Temperaturregelung in mehreren Materialzufuhrkanälen einer Spritzgußmaschine. In jedem Kanal sind ein elektrischer Heizwiderstand und ein Thermoelement vorgesehen. Jedem Heizwiderstand ist ein Regler zugeordnet, der die Leistungszufuhr von einer Stromquelle zum Heizwiderstand regelt. Eine möglichst konstante und gleicheTemperatur soll in allen Kanälen auch dann aufrechterhalten werden, wenn ein Thermoelement ausfällt. Dies geschieht dadurch, daß man im schadhaften Regelkreis von einer Temperaturregelung auf eine Heizleistungssteuerung umschaltet und als Führungsgröße die am benachbarten Heizer gemessene Temperatur nimmt.

Im Normalbetrieb unterscheiden sich die zum Erzielen einer übereinstimmenden Temperatur in den Kanälen den verschiedenen Heizern zugeführten Leistungen in Abhängigkeit von den lokalen Bedingungen des betreffenden Heizkreises. Dieser prozentuale Unterschied der einzelnen Heizleistungen wird bei ordnungsgemäßem Normalbetrieb gemessen und gespeichert. Fällt ein Temperaturfühler aus, so erhält sein zugeordneter Heizer eine Leistung, welche um den gespeicherten Prozentsatz von der Heizleistung des Nachbarheizers abweicht. Ändert sich im Laufe des Betriebs die Heizleistung jenes Nachbarheizers, so wird die des schadhaften Heizkreises entsprechend nachgeführt. Im Optimalfall sind alle Regelkreise derart miteinander vernetzt, daß auch beim Ausfall mehrerer Temperaturfühler die Temperaturregelung wenigstens angenähert aufrechterhalten bleibt.

Hier werden zwar in einer Initialphase die zur Erzielung einer einheitlichen Temperatur in allen Kanälen erforderlichen Stellgrößen in Form der Heizleistungen gemessen und ihre prozentualen Abweichungen von einem Bezugswert, nämlich der Heizleistung eines Nachbarheizers ermittelt und gespeichert. Dieser Speicherwert dient aber allein der Aufrechterhaltung der Temperaturregelung im Falle eines schadhaften Temperaturfühlers in einem der Heizkreise. Eine zusätzliche Übenvachung der Regelkreise findet jedoch nicht statt.

Wenn, wie eingangs erwähnt, zusätzlich zur Regelung eine Überwachung der ordnungsgemäßen Funktion der Regelkreise gefordert wird, erlaubt die im Anspruch 1 gekennzeichnete Erfindung, die hohen Kosten eines redundanten, danten.

Systems mit je zwei Meßfühlern pro Regelkreis zu umgehen und dennoch eine zuverlässige Überwachung der Temperatur oder einer anderen Regelgröße zu gewährleisten.

Die Erfindung überwacht an jeder Regelstrecke den Stellgrad des Reglers, d. h. das prozentuale Verhältnis der aktuellen Stellgröße zur maximal vorgesehenen oder zulässigen Stellgröße

$$\text{Stellgrad} = \frac{\text{augenblickliche Stellgröße}}{\text{maximale Stellgröße}} \times 100\%.$$

Im Falle eines elektrischen Heizers ist die Stellgröße die Heizleistung. Ein der aktuellen Stellgröße und damit dem Stellgrad proportionales Signal ist aber im Regler ohnehin vorhanden. Es ist das Stellgrößensignal am Reglerausgang. Anstelle einer Vielzahl zusätzlicher redundanter Istwertfühler für die Regelgröße (z.B. Temperatur) nutzt die Erfindung das für jede Regelstrecke schon vorhandene Stellgrößensignal zur Überwachung aus, indem dieses durch Bildung des Stellgrads für alle Regelstrecken auf ein gemeinsames Niveau normiert und dann ausgewertet wird.

Dies soll anhand der Temperaturregelung einer Textilmaschine dargestellt werden. Das Verfahren ist aber auch für die Regelung anderer physikalischer Größen in analoger Weise anwendbar. Vorteilhafte Ausgestaltungen und Einzelheiten der Erfindung ergeben sich aus den Unteransprüchen.

Das Verfahren beruht darauf, daß die Heizleistung einer Vielzahl gleichartiger Heizstellen wie Heizgaletten oder Heizplatten. welche denselben Störgrößen ausgesetzt sind, untereinander gleich sein muß, wenn die Temperaturen gleich sind. Weicht eine Heizstelle von ihrer Sollwerttemperatur ab, so weicht auch ihre Heizleistung von der der übrigen Heizstellen ab. Es ist damit zu rechnen, daß diese Heizstelle mit einem Fehler behaftet ist, oder daß sich die Nutzheizlast an dieser Stelle geändert hat, was z.B. der Fall ist, wenn der aufzuheizende, synthetische Faden gerissen ist.

Bei Temperaturreglern ist die Größe des Stellgrades ein Maß für die elektrische Heizenergie, die der Heizstelle zugeführt wird. Um die absolute Höhe der Temperatur jeder Heizstelle zu überwachen, genügt es, die Gleichheit des Stellgrads des Reglers von Heizstelle zu Heizstelle nachzuweisen, um entscheiden zu können, ob die Temperatur der Heizstellen gleich hoch ist und sich über einen langen Zeitraum nicht verändert hat. Der Stellgrad ist eine interne Größe des Reglers und ist bei digitalen Reglern von einem übergeordneten Rechner leicht periodisch abfragbar und damit analysierbar.

In manchen Fällen stellt der vom Regelfühler erfaßte und dem Regler zugeführte Istwert der Regelgröße gar nicht den Istwert derjenigen Größe dar, welche konstant gehalten oder geregelt werden soll. Bei einer Textilmaschine ist die kritische und deshalb zu regelnde Größe die Oberflächentemperatur der Heizrolle oder Heizplatte. Insbesondere bei Rollen oder Galetten wird aber im Betrieb nicht die Oberflächentemperatur selbst gemessen, sondern der Regelfühler sitzt entweder innerhalb des Galettenmantels (rotierender Fühler) oder er ragt in eine Ringnut der Rolle hinein (stationärer Fühler). Gemessen wird also nicht die für die Behandlung des Fadens kritische Oberflächentemperatur sondern eine dieser Oberflächentemperatur mehr oder weniger proportionale Temperatur, welche als Istwert dem Regler zugeführt wird. Auch die Oberflächentemperatur selbst ist an unterschiedlichen Stellen der Rolle unterschiedlich, z.B. an den Enden und im mittleren Bereich. Der Istwert der Regelgröße Temperatur an der Regelstrecke Galette ist folglich nicht immer identisch mit dem vom Regelfühler, z.B. innerhalb der Rolle gemessenen Temperatur-Istwert. Selbst bei an sich gleichen Regelstrecken, z.B. Heizgaletten, ist diese Istwertdifferenz toleranzbehaftet, z.B. aufgrund von Toleranzen der Regelfühler oder ihres Einbaus. Auch diese Unterschiede können in Weiterbildung der Erfindung berücksichtigt und kompensiert werden.

Das Verfahren gemäß der Erfindung gliedert sich in zwei zeitlich voneinander getrennte Stufen, nämlich

a) eine Initialphase und
b) eine Betriebs- oder Produktionsphase.

Die Initialphase ist notwendig, um alle Ungleichheiten der Stellsignale aufgrund von Fühlertoleranzen, mechanischen Einbautoleranzen des Fühlers, sowie Toleranzen der installierten Heizleistung der Heizelemente, wie Windungszahltoleranzen von Induktionsheizern oder Widerstandstoleranzen von Widerstandsheizern und dergl. zu kompensieren. Dies erfolgt in weiterer Ausgestaltung der Erfindung nach folgender Methode:

A) Abstimmung der Maschine während der initialphase

Das Stellgradüberwachungsverfahren erfordert, daß in einer Initialphase alle Oberflächentemperaturen gleichartiger Heizer auf den gleichen Istwert abgestimmt werden. Dabei können gleichartige Heizer in Gruppen zusammengefaßt sein. Diese Abstimmung bewerkstelligt normalerweise der Regler selbst, wenn er die Regelabweichung auf Null bringt. Durch die oben beschriebenen Störgrößen und Toleranzen können jedoch Unterschiede der Oberflächentemperaturen auftreten. Zum Zwecke der Abstimmung der Oberflächentemperaturen werden alle Heizstellen möglichst nahe dem endgültigen Betriebszustand (Temperatur, Drehzahl) aufgeheizt und geregelt. Sobald ein stationärer Betriebszustand erreicht ist, wird die Oberflächentemperatur jeder Heizstelle mit einem eigens dafür geeigneten Meßgerät an jeweils derselben Stelle des Heizers gemessen. Diese Temperatur wird in der Regel, wie bereits erwähnt, nicht genau der Sollwerttemperatur entsprechen, die für gleichartige Regelstellen gemeinsam eingestellt ist, weil die besagten Toleranzunterschiede von Heizstelle zu Heizstelle vorhanden sind. Diese Messung erfolgt nur einmal während der Initialphase. Der Meßwert wird dem übergeordneten Prozessleitrechner über einen eigenen Datenbus oder auch manuell mitgeteilt. Der Rechner bildet aus diesen Meßwerten einen ersten Temperatur-Mittelwert:

$$\bar{x}_1 = \frac{1}{n} \sum_{i=1}^{i=n} xi \qquad (1)$$

$\bar{x}_1$ : Erster Mittelwert des Istwertes aller Regelstellen
$n$ : Anzahl der Regelstellen
$x_i$ : Istwert der i-ten Regelstelle und vergleicht alle gemessenen Temperaturwerte mit diesem ersten Mittelwert $\bar{x}_i$,

$$\Delta x_{1\,i} = \bar{x}_1 - x_i \qquad (2)$$

Hierbei wird es möglicherweise Meßstellen geben, bei denen sich eine Abweichung ergibt, die außerhalb eines vorgegebenenen Grenzwertes liegt. Solche Meßstellen oder Regelstrecken $x'_i$ lassen darauf schließen, daß dies eine mit einem Defekt behaftete Regelstelle ist, die der Rechner markiert und bei einer zweiten Mittelwertbildung nicht berücksichtigt:

$$\bar{x}_2 = \frac{1}{n-n'}\sum_{i=1}^{i=n} x_i \quad \text{für alle } x_i \neq x'_i \tag{3}$$

$\bar{x}_2$ :     Zweiter verbesserter Mittelwert der Temperatur-Istwerte
$n'$ :     Nummer der markierten Regelstelle
$x'_i$ :     Istwert der i-ten markierten Regelstelle

Der Rechner stellt die Abweichung zwischen dem verbesserten zweiten Temperaturmittelwert und dem gemessenen Meßwert fest

$$\Delta x_{2i} = \bar{x}_2 - x_i \tag{4}$$

$\Delta x_{2i}$ :     Temperaturkorrekturwert (Trimwert) der i-ten Regelstelle (4)

und addiert oder subtrahiert diesen Wert vom Istwert des Regel fühlers. Dadurch wird dem Regler in der Folge ein korrigierter (getrimter) Regelfühlerwert

$$\hat{x}_{2i} = x_i \pm \Delta x_{2i} \tag{5}$$

$\hat{x}_{2i}$ :     Korrigierter (getrimter) Istwert der i-ten Regelstelle

vorgegeben, der die beschriebenen Meßfühlertoleranzen etc. kompensiert. Trotz der Toleranzen wird also die Temperatur an der Heizeroberfläche nach einer gewissen Einregelzeit von Heizstelle zu Heizstelle gleich sein, nämlich dem verbesserten zweiten Temperaturmittelwert $\bar{x}_2$ entsprechen.

Die Heizleistung und mithin die Stellgrade der Regler müßten damit auch gleich sein; dem ist aber zumeist nicht so, weil die Stellgliedtoleranzen (Induktions- oder Widerstandsheizer) sowie unterschiedliche Netzspannungen oder unterschiedliche Umgebungsbedingungen zu unterschiedlichen Stellgraden führen können.

Aus diesem Grunde wird in Weiterbildung der Erfindung eine Steilgradkorrekturzahl ermittelt. Zu diesem Zweck ruft ein Prozessrechner die Stellgrade aller Regelstellen ab, die zu einer Stellgradgruppe gehören. Zu einer Stellgradgruppe sind in der Regel alle Heizer zusammnengefaßt, die mit gleichem Temperatursollwert gefahren werden. Es können aber auch andere Kriterien zur Gruppenbildung führen, z. B. gleiche Netzphase etc. Aus diesen Stellgraden bildet der Rechner einen ersten, arithmetischen Mittelwert

$$\bar{y}_1 = \frac{1}{n}\sum_{i=1}^{i=n} y_i \tag{6}$$

$\bar{y}_1$ :     Erster Mittelwert der Stellgrade
$y_i$ :     Stellgrad der i-ten Regelstelle

Mit diesem ersten Mittelwert $\bar{y}_i$ werden alle Stellgrade dieser Gruppe verglichen.

$$\Delta y_{1i} = \bar{y}_1 - y_i \tag{7}$$

Hierbei kann es vorkommen, daß einige Stellgrade $y'_i$ stark von diesem ersten errechneten Mittelwert abweichen, da sie mit einem zu großen Stellgradfehler oder mit einem Fadenriß behaftet sind. Es kann möglicherweise ein Austausch der jeweiligen defekten Komponenten vorgenommen werden.

Jedenfalls wird der Rechner bei einer zweiten Mittelwertbildung diese Stellen nicht berücksichtigen und damit einen verbesserten, zweiten Stellgrad-Mittelwert bilden:

$$\bar{y}_2 = \frac{1}{n - n'} \sum_{i=1}^{i=n} y_i \quad \text{für alle } y_i \neq y'_i \tag{8}$$

$\bar{y}_2$ :      Zweiter, verbesserter Stellgrad-Mittelwert

$y'_i$ :      Markierter Stellgrad der i-ten Regelstelle

$n'$ :      Nummer der markierten i-ten Regelstelle

Mit diesem verbesserten zweiten Stellgrad-Mittelwert als Maßstab werden die Stellgrade aller Regelstellen durch den Rechner verglichen.

Die Abweichung der Stellgrade

$$\Delta y_{2i} = \bar{y}_2 - y_i \tag{9}$$

von diesem verbesserten, zweiten Stellgrad-Mittelwert kann zu den jeweiligen Stellgraden hinzuaddiert werden,

$$\hat{y}_i = y_i \pm \Delta y_{2i} \tag{10}$$

$\hat{y}_i$ :      Korrigiertes Stellsignal der i-ten Regelstelle

$\Delta y_{2i}$ :      Korrekturwert des Stellgrades der i-ten Regelstelle

sodaß korrigierte Stellgrößen- oder Stellsignale $\hat{y}_i$ entstehen, die alle dem verbesserten zweiten Stellgrad-Mittelwert entsprechen, solange kein Temperaturfehler in der Regelung auftritt.

Diese Stellgradkorrekturwerte werden im Rechner gespeichert und zur weiteren Benutzung in der eigentlichen Überwachungsphase während des regulären Produktionsbetriebs zur Bildung eines korrigierten Stellgrades verwendet.

Eine alternative Methode besteht darin den Stellgradkorrektunvert in der Initialphase nicht zu berechnen. Dies bedeutet, daß jedem Heizer einer Gruppe ein eigenes Stellgrad-Alarmband, d.h. eine zulässige Schwankungsbreite des Stellgrads, zuzuordnen ist.

B) Stellsignalüberwachung während des Betriebs

Nach der Initialisierungsphase beim Einfahren der Maschine kann nunmehr die Größe und Gleichheit der Stellgrade und damit die Höhe und Gleichheit der Heizertemperaturen aller Regelstellen wie folgt durch den Rechner während des Produktionsbetriebes überwacht werden.

Hierzu tastet der Rechner in regelmäßigen Zeitabständen T den jeweiligen Stellgrad aller Regler ab. Jedem Stellgrad $y_{Ti}$ wird der ihm eigene, während der Initialphase ermittelte Korrekturwert hinzuaddiert.

$$\hat{y}_{Ti} = y_{Ti} \pm \Delta y_{2i} \tag{11}$$

$\hat{y}_{Ti}$ :      Korrigierter Stellgrad der i-ten Regelstelle zum Zeitpunkt T

$y_{Ti}$ :      Nicht korrigierter Stellgrad der i-ten Regelstelle zum Zeitpunkt T

Aus dem so errechneten korrigierten Stellgrad $\hat{y}_{Ti}$ wird ein erster Mittelwert

$$\bar{y}_{1T} = \frac{1}{n} \sum_{i=1}^{i=n} \hat{y}_{Ti} \tag{12}$$

$\bar{y}_{1T}$ :      Erster Stellgrad-Mittelwert zum Abfragezeitpunkt T gebildet. Jeder Stellgrad wird nunmehr durch den Mittelwert dividiert, wodurch ein normierter Stellgrad entsteht :

$$\widetilde{y}_{1Ti} = \frac{\hat{y}_{Ti}}{\bar{y}_{1T}} \tag{13}$$

$\widetilde{y}_{1Ti}$ :     Erster normierter Stellgrad der i-ten Stelle zum Zeipunkt T

$\hat{y}_{Ti}$ :     Korrigierter Stellgrad der i-ten Regelstelle zum Abäagezeitpunkt T

$\bar{y}_{1T}$ :     Erster Mittelwert der Stellgrade zum Abfragezeitpunkt

Die Normierung des Stellgrades ist sinnvoll, weil durch Langzeitschwankungen der Umweltbedingungen oder des Maschinengestells die Stellgrade insgesamt und damit auch der daraus gebildete Mittelwert sich um denselben prozentualen Wert verändern können. Das bedeutet aber, daß sich zwar der absolute Wert des Stellgrades ändern kann nicht aber der normierte Wert, weil der gebildete Mittelwert sich um denselben Betrag ändert. Der normierte Wert wird immer ein Wert in der Größenordnung von 1 sein.

Jeder normierte Stellgrad wird nunmehr untersucht, ob er innerhalb eines Alarmbandes um den Wert 1 liegt, z.B. 0,09 < Alarmband > 1,01 liegt. Werte die außerhalb dieses Bandes liegen, werden markiert und für eine verbesserte, zweite Mittelwertbildung nicht verwendet:

$$\bar{y}_{2T} = \frac{1}{n-n'}\sum_{i=1}^{i=n}\hat{y}_{Ti} \quad \textbf{für alle } \hat{y}_{Ti} \neq \hat{y}'_{Ti} \tag{14}$$

$\bar{y}_{2T}$ :     Zweiter, verbesserter Stellgradmittelwert zum Abfragezeitpunkt T

$\hat{y}'_{Ti}$ :     Markierter (kordgierter) Stellgrad der i-ten Regelstelle zum Abfragezeitpunkt

Damit wird ein zum jeweiligen Zeitpunkt geeigneter Maßstab pro Heizergruppe für den Stellgradvergleich gebildet, der nicht durch fehlerhafte Heizstellen verfälscht ist.

Alle Stellgrade werden nun mit dem zweiten, verbesserten Mittelwert $\bar{y}_{2T}$ normiert. Die so gebildeten normierten Stellgrade $\widetilde{y}_{2Ti}$ haben einen Wert von 1, falls sie nicht mit einem Temperaturfehler behaftet sind Durch Vergleich mit einem Stellgradalarmband z.B. 0,99 < Alarmband > 1,01, kann festgestellt werden, welcher Stellgrad und damit welcher Regelkreis außerhalb liegt und vermutlich einen Temperaturfehler hat. Falls normierte Stellgrade außerhalb dieses Bandes liegen, wird ein Alarm ausgelöst.

Eine andere Art der Stellgradalarmierung besteht darin, daß der während der Initialphase ermittelte Korrekturwert des Stellgrads nicht zu den periodisch ermittelten Stellgraden hinzu addiert oder subtrahiert wird. In diesem Fall muß jedem normierten Stellgrad $\widetilde{y}_{2Ti}$ jedes einzelnen Heizers ein individuelles Alarmband z.B. 0,96 < Alarmband > 0.98 zugeordnet werden und die Ermittlung des Stellgradkorrekturwertes während der Initialphase kann entfallen.

Beim Stillstand der Maschine kann aufgrund nichtlinearer Verhältnisse eine Vielzahl von an sich unkritischen Fehlern auftreten. Aus diesem Grund wird in solchen Fällen während dieser Zeitdauer die Alarmgabe ausgeschaltet und erst wieder zugeschaltet. wenn die Maschine wieder im stationären Produktionszustand ist.

Ein falscher Alarm kann auch auftreten, wenn ein Faden an einer Heizstelle reißt. In einem solchen Fall wird der Stellgradalarm unterdrückt. Das Vorhandensein eines Fadens wird in der Regel durch einen Fadenwächter dem Temperaturregler mitgeteilt. Ein Fadenriß verursacht eine plötzliche Änderung des Stellgrads. Dies kann zur berührungslosen Fadenbruchüberwachung ausgenutzt werden.

Das beschriebene Verfahren läßt sich insofern verfeinern, als Heizstellen mit gleichartigen Betiebsbedingungen zum Zwecke der Mittelwertbildung wie erwähnt zu Gruppen zusammengefaßt werden. Dadurch wird die Selektivität des Stellgradüberwachunosverfahrens verbessert. Die möglichen Kriterien für die Zusammmenfassung von Heizern zu einer Gruppe sind der Wichtigkeit entsprechend geordnet folgende:

-    Gleiche Heizertypen mit gleichem Temperatursollwert;
-    Heizer, die örtlich ähnlichen Umwelteinflüssen ausgesetzt sind;
-    Heizer an der gleiche Phasenleitung des dreiphasigen Netzes.

Die Gruppenbildung ist nach den genannten drei Kriterien frei wählbar.

Die Erfindung ist nicht nur bei Temperaturreglern und auch nicht nur bei Textilmaschinen anwendbar, sondern kann überall dort zum Einsatz kommen, wo mehrere Regelstrecken den gleichen Sollwert haben und der Stellgrad ein Maß für die der Regelstrecke zugeführte Energie ist. Dies kann beispielsweise der Druck in mehreren Behandlungskammern oder Rohrleitungen sein, der Durchsatz durch mehere Versorgungs- oder Abflußleitungen, die relative Feuchte in Kammern oder Produkten oder jede andere regelbare physikalische Größe.

**Patentansprüche**

1. Verfahren zum Überwachen von mehreren, jeweils aus Regelfühler, Regler und Regelstrecke bestehenden Regelkreisen mit übereinstimmendem Sollwert der Regelgröße, wobei in einer Initialphase die Istwerte aller Regelstrecken auf den gemeinsamen Sollwert geregelt werden und nach dem Erreichen eines stationären Betriebszustands in jedem Regelkreis ein zur Erzielung des übereinstimmenden Istwerts erforderliches Verhältnis der augenblicklichen Stellgröße zu einem Bezugswert ermittelt und gespeichert wird,
**dadurch gekennzeichnet,** daß

   a) in der Initialphase der Stellgrad jedes Reglers als Verhältnis der augenblicklichen Stellgröße zum Maximalwert der Stellgröße ermittelt und gespeichert wird und
   b) zur zusätzlichen Überwachung der Regelkreise in der Betriebsphase ihr jeweiliger Stellgrad mit dem gespeicherten Wert verglichen und ein Alarmsignal erzeugt wird, sobald ein Stellgrad um mehr als einen vorgegebenen Betrag vom gespeicherten Wert abweicht.

2. Verfahren nach Anspruch 1, dadurch gekennzeichnet, daß die Messung des istwerts der Regelgröße während der Initialphase an jeder Regelstrecke mit Hilfe eines besonderen Abgleichfühlers erfolgt.

3. Verfahren nach Anspruch 1, dadurch gekennzeichnet, daß die Einregelung der Regelkreise auf den gemeinsamen Sollwert während der Initialphase durch Hinzufügen eines Korrekturwerts zum vom Regelfühler gemessenen Istwert erfolgt.

4. Verfahren nach Anspruch 2 oder 3, dadurch gekennzeichnet, daß während der initialphase

   a) aus den vom Abgleichfühler an verschiedenen Regelstrecken gemessenen Werten der Regelgröße ein erster Mittelwert gebildet und dieser für jede Regelstelle mit dem Betrag der dort vom Abgleichfühler gemessenen Regelgröße verglichen wird;
   b) der hierbei ermittelte Istwertfehler (Regelabweichung) an den einzelnen Regelstellen mit einem vorgegebenen Grenzwert verglichen wird; und
   c) bei der nachfolgenden Berechnung eines zweiten, verbessserten Mittelwerts die Regel stellen mit einem über dem Grenzwert liegenden Istwertfehler unberücksichtigt bleiben.

5. Verfahren nach Anspruch 4, dadurch gekennzeichnet, daß während der Initialphase der vom Abgleichfühler gemesssene Wert der Regelgröße an jeder Regelstelle mit dem zweiten, verbessserten Mittelwert verglichen und aus der Differenz ein Korrekturwert ermittelt wird, mit dem in der nachfolgenden Betriebsphase der vom Regel fühler des betreffenden Regelkreises gemessene Istwert der Regelgröße korrigiert wird, um an allen nicht mit einem Fehler behafteten Regelstellen den gleichen Istwert der Regelgröße zu erzielen.

6. Verfahren nach Anspruch 5, dadurch gekennzeichnet, daß zur Ermittlung des Korrekturwerts der Wert der vom Abgleichfühler gemessenen Regelgröße an jeder Regelstelle über einen Datenbus einem übergeordnetem Leitrechener zugeführt wird.

7. Verfahren nach einem der Ansprüche 3 bis 6, dadurch gekennzeichnet, daß in der Initialphase nach der Istwertkorrektur der Stellgrad jedes Reglers und damit der aktuelle Wert der Stellgröße von einem übergeordneten Rechner abgefragt wird und durch Addition oder Subtraktion eines Korrekturwerts zum Stellgrad alle Regelstellen nicht nur den gleichen Istwert der Regelgröße haben sondern auch gleiche, korrigierte Stellsignale erhalten.

8. Verfahren nach Anspruch 7, dadurch gekennzeichnet, daß

   a) zur Berechnung der Stellgrad-Korrekturwerte aus den Stellgraden aller Regel stellen einer Gruppe ein erster Mittelwert errechnet wird;
   b) alle Stellgrade mit diesem ersten Mittelwert verglichen werden,
   c) jene Stellgrade markiert werden, die außerhalb eines vorgegebenen Grenzwertes liegen;
   d) ein zweiter verbesserter Mittelwert der Stellgrade gebildet wird, der die markierten Stellgrade nicht berücksichtigt,
e) die Korrekturwerte der Stellgrade durch Vergleich mit dem zweiten, verbesserten Stellgrad-Mittelwert normiert und während der Betriebsphase als Stellgradkorrektur benutzt werden.

9. Verfahren nach Anspruch 8, dadurch gekennzeichnet, daß die Berechnung der Abweichung der korrigierten und normierten Stellgrade von einem Stellgrad-Mittelwert während der Betriebsphase in vorgegebenen zeitlichen Abständen erfolgt und ein Alarmsignal erzeugt wird, wenn die Abweichung des normierten Stellgrades einer Regelstelle größer als ein vorgegebenes Alarmband um den Wert 1 ist.

10. Verfahren nach Anspruch 7, dadurch gekennzeichnet, daß während der Initialphase

a) zur Berechnung eines Stellgrad-Mittelwerts aus den Stellgraden aller Regelstellen einer Gruppe ein erster Mittelwert errechnet wird;
b) alle Stellgrade mit diesem ersten Mittelwert verglichen werden;
c) jene Stellgrade markiert werden, die außerhalb eines vorgegebenen Grenzwertes liegen;
d) ein zweiter verbesserter Mittelwert der Stellgrade gebildet wird, der die markierten Stellgrade nicht berücksichtigt.

11. Verfahren nach einem der Ansprüche 1 bis 10, dadurch gekennzeichnet, daß bei starken Änderungen von Maschinenparametern, wie Geschwindigkeit oder Temperatur-Sollwert, die Stellgradüberwachung ausgeschaltet wird, um ungerechtfertigte Fehlalarme auszuschließen.

12. Verfahren nach einem der Ansprüche 1 bis 11, angewandt bei einer Garnbehandlungsmaschine, dadurch gekennzeichnet, daß bei einem Fadenbruch an einer Heizstelle die Stellgradüberwachung dieser Heizstelle abgeschaltet wird.

13. Verfahren nach einem der Ansprüche 1 bis 11, angewandt bei einer Garnbehandlungsmaschine, dadurch gekennzeichnet, daß bei Änderungen des Sollwerts der Temperatur oder der Maschinengeschwindigkeit die Temperatur- und Stellgrad-Korrekturwerte, die während der Initialphase errechnet wurden, mit einem Korrekturkoeffizienten multipliziert werden, um zumindest in erster Annäherung eine Nichtlinearität der Korrekturwerte zu kompensieren, so daß auch bei großen Änderungen von Temperatursollwert und/oder Maschinengeschwindigkeit keine neue Initialisierung notwendig wird.

14. Verfahren nach einem der Ansprüchen 1 bis 7, dadurch gekennzeichnet, daß in der Betriebsphase

a) die Stellgrade der einzelnen Regelstellen abgetastet und normiert werden, indem aus den Stellgraden aller Regelstellen einer Gruppe ein erster Mittelwert errechnet wird;
b) alle Stellgrade mit diesem ersten Mittelwert verglichen werden;
c) jene Stellgrade markiert werden, die außerhalb eines vorgegebenen Grenzwertes liegen;
d) ein zweiter verbesserter Mittelwert der Stellgrade gebildet wird, der die markierten Stellgrade nicht berücksichtigt, und
e) die Stellgrade durch den verbesserten zweiten Mittelwert dividiert und so normiert werden; und daß
f) dem normierten Stellgrad jeder Regelstelle ein Alarmband zugeordnet ist und ein Alarmsignal erzeugt wird, sobald ein normierter Stellgrad das Alarmband überschreitet.

15. Verfahren nach Anspruch 14, dadurch gekennzeichnet, daß das Alarmband unsymmetrisch zum Wert 1 liegt.

16. Verfahren nach einem der Ansprüche 1 bis 15, dadurch gekennzeichnet, daß eine plötzliche Stellgradänderung als Fadenriß angezeigt wird.

## Claims

1. A method for monitoring a plurality of control loops, each loop consisting of an actual value sensor, a controller, and a controlled system, with all loops having identical setpoint values of the controlled quantity, where during an initial phase the actual values of all control systems are controlled to said common setpoint, and after reaching a stationary operating condition, a particular ratio value is established and stored for each control loop, which ratio is formed by the actual value of the controlled quantity and a reference value and has a particular value as required for achieving said common setpoint, **characterized in that**

a) during said initial phase the control ratio of each controller is determined and stored in the form of the ratio of the actual controlled quantity divided by the maximum value of said controlled quantity; and
b) for additionally monitoring the control loops during the operating phase their actual control ratios are compared with said stored value, and an alarm signal is generated if a control ratio deviates from said stored value by more than a predetermined amount.

2. The method of claim 1, characterized in that measuring the actual value of the controlled quantity in each controlled system during said initial phase is accomplished by means of a particular balancing sensor.

3. The method of claim 1, characterized in that controlling said control loops to said common setpoint during the initial phase is accomplished by adding a correction value to the actual value as measured by said control sensor.

4. The method of claim 2 or 3, characterized in that during said initial phase

a) a first mean value is derived from the values of the controlled quantity as measured by said balancing sensor at the various controlled systems, and this first mean value is for each control point compared with the controlled quantity as measured there by said balancing sensor;
b) the therewith determined errors of the actual value (control error) at the individual control points are compared with a predetermined limit; and
c) during the subsequent calculation of an improved second mean value, those control points with a control error exceeding said limit remain unused.

5. The method of claim 4, characterized in that during said initial phase the value of the controlled quantity as measured by the balancing sensor is at each control point compared with said improved second mean value; and from the difference a correction value is derived, by which the actual value of the controlled quantity, as measured by the control sensor during the subsequent operating phase, is corrected in order to achieve the same actual value of the controlled quantity at al non-defective control points.

6. The method of claim 5, characterized in that, for determining the said correction value, the value of the controlled quantity as measured by said balancing sensor at each control point is supplied to a supervising control computer via a data bus.

7. The method according to one of the claims 3 to 6, characterized in that during the initial phase after correcting the actual value, the control ratio of each controller and therwith the actual value of its controlled quantity is sampled by a supervising computer, and by adding a correction value to or subtracting a correction value from said control ratio, all control points will not only have the same actual value of the controlled quantity, but also will receive the same corrected control signals.

8. The method of claim 7, characterized in that

a) from the control ratios of all control points of a group a first mean value is calculated for calculating the control ratio correction values;
b) all control ratios are compared with said first mean value;
c) those control ratios are marked which lie outside a predetermined limit;
d) an improved second mean value of the contol ratios is formed which leaves said marked control ratios unused;
e) the correction values of the control ratios are normalized by comparing them with said improved second mean value and then are used during the operating phase for correcting the control ratios.

9. The method of claim 8, characterized in that the calculation of the deviation of the corrected and normalized control ratios from a control ratio mean value is accomplished during the operating phase at predetermined time intervals, and an alarm signal is generated if said deviation of the normalized control ratio of a control point exceeds a predetermined alarm band around the value 1.

10. The method of claim 7, characterized in that during the initial phase

## EP 0 823 077 B1

a) for calculating a mean value of the control ratios a first mean value is calculated from the control ratios of all control points of a group;
b) all control ratios ar compared with said first mean value;
c) those control ratios are marked which lie outside a predetermined limit;
d) an improved second mean value of the control ratios is formed which leaves said marked control ratios unused.

**11.** The method according to one of the claims 1 to 10, characterized in that in case of heavy changes of machine parameters such as speed or temperature setpoint, the control ratio monitoring system is switched-off in order to avoid non-justified false alarms.

**12.** The method according to one of the claims 1 to 11 when applied to a yarn treating machine, characterized in that in case of a yarn break at a heating element, control ratio monitoring of this heating element is switched-off.

**13.** The method according to one of the claims 1 to 11 when applied to a yarn treating machine, characterized in that in case of changing the setpoint temperature or the machine speed setpoint, those correction values for temperature and control ratio which were calculated during the initial phase, are multiplied with a correction coefficient, in order to compensate any non-linearity of the correction values at least in a first approximation, so that even in the case of heavy changes of temperature setpoint and/or machine speed, no new initializing is required.

**14.** The method according to one of the claims 1 to 7, characterized in that during the operating phase

a) the control ratios of the individual control points are sampled and normalized by calculating a first mean value from the control ratios of all control points of a group;
b) all control ratios are compared with said first mean value;
c) those control values are marked which lie outside a predetermined limit;
d) an improved second mean value of the control ratios is formed which leaves those marked control ratios unused;
e) the control ratios are normalized by dividing them by the improved second mean value; and
f) an alarm band is associated with the normalized control ratio of each control point and an alarm signal is generated, if a normalized control ratio exceeds said alarm band.

**15.** The method of claim 14, characterized in that said alarm band is provided non-symmetrically with respect to the value 1.

**16.** The method according to one of the claims 1 to 15, characterized in that a sudden change of the control ratio is indicated as a yarn break.

**Revendications**

**1.** Procédé pour contrôler plusieurs circuits de régulation constitués respectivement par un capteur de régulation, un régulateur et une section de régulation, avec une valeur de consigne concordante de la grandeur de réglage, selon lequel pendant une phase initiale, les valeurs réelles de toutes les sections de régulation sont réglées sur la valeur de consigne commune et, une fois atteint un état de fonctionnement stationnaire pour chaque circuit de régulation, un rapport, qui est nécessaire pour l'obtention de la valeur réelle concordante, de la grandeur de réglage instantanée à une valeur de référence est déterminé et mémorisé;
caractérisé en ce que

a) pendant la phase initiale, le degré de réglage de chaque régulateur est déterminé en tant que rapport de la grandeur de réglage instantanée à la valeur maximale de la grandeur de réglage, et est mémorisé, et
b) pour le contrôle supplémentaire des circuits de régulation pendant la phase de fonctionnement, leur degré respectif de réglage est comparé à la valeur mémorisée et un signal d'alarme est produit dès qu'un degré de réglage s'écarte de plus d'une valeur absolue prédéterminée par rapport à la valeur mémorisée.

**2.** Procédé selon la revendication 1, caractérisé en ce que la mesure de la valeur réelle de la grandeur de réglage pendant la phase initiale s'effectue dans chaque section de régulation à l'aide d'un capteur de compensation particulier.

**3.** Procédé selon la revendication 1, caractérisé en ce que la régulation des circuits de régulation sur la valeur de consigne commune pendant la phase initiale s'effectue par addition d'une valeur de correction à la valeur réelle mesurée par le capteur de régulation.

**4.** Procédé selon la revendication 2 ou 3, caractérisé en ce que pendant la phase initiale

a) une première valeur moyenne est formée à partir des valeurs de la grandeur de réglage, mesurées par le capteur de compensation au niveau de différentes sections de régulation, et cette valeur moyenne est comparée pour chaque point de régulation à la valeur absolue de la grandeur de réglage mesurée en cet endroit par le capteur de compensation;
b) l'erreur de valeur réelle déterminée (écart de régulation) est comparée au niveau des emplacements individuels de régulation à une valeur limite prédéterminée; et
c) après exécution du calcul d'une seconde valeur moyenne améliorée, les emplacements de régulation présentant une erreur de valeur réelle supérieure à la valeur limite ne sont pas pris en compte.

**5.** Procédé selon la revendication 4, caractérisé en ce que pendant la phase initiale, la valeur, mesurée par le capteur de compensation, de la grandeur de réglage est comparée en chaque emplacement de régulation à la seconde valeur moyenne améliorée et une valeur de correction est déterminée à partir de la différence, valeur de correction avec laquelle la valeur réelle de la grandeur de réglage, mesurée par le capteur de régulation du circuit de régulation considéré, est corrigée pendant la phase de fonctionnement suivante, pour l'obtention de la même valeur réelle de la grandeur de réglage en tous les emplacements de régulation non affectés d'une erreur.

**6.** Procédé selon la revendication 5, caractérisé en ce que pour la détermination de la valeur de correction, la valeur de la grandeur de réglage mesurée par le capteur de compensation en chaque emplacement de régulation est envoyée par l'intermédiaire d'un bus de transmission de données à un calculateur pilote de rang supérieur.

**7.** Procédé selon l'une des revendications 3 à 6, caractérisé en ce que pendant la phase initiale, après la correction de la valeur réelle, le degré de réglage de chaque régulateur et par conséquent la valeur réelle de la grandeur de réglage sont interrogés par un calculateur de rang supérieur et moyennant l'addition ou la soustraction d'une valeur de correction au degré de réglage, tous les emplacements de régulation reçoivent non seulement la même valeur réelle de la grandeur de réglage, mais également des signaux de réglage corrigés identiques.

**8.** Procédé selon la revendication 7, caractérisé en ce que

a) pour calculer les valeurs de correction du degré de réglage, une première valeur moyenne est calculée à partir des degrés de réglage de tous les emplacements de réglage d'un groupe;
b) tous les degrés de réglage sont comparés à cette première valeur moyenne;
c) les degrés de réglage, qui sont situés à l'extérieur d'une valeur limite prédéterminée, sont marqués;
d) une seconde valeur moyenne améliorée des degrés de réglage est formée, cette valeur ne prenant pas en compte des degrés de réglage marqués,
e) les valeurs de correction des degrés de réglage sont normalisées par comparaison à la seconde valeur moyenne améliorée du degré de réglage et sont utilisées en tant que condition du degré de réglage pendant la phase de fonctionnement.

**9.** Procédé selon la revendication 8, caractérisé en ce que le calcul de l'écart des degrés de réglage corrigés et normalisés par rapport à une valeur moyenne du degré de réglage s'effectue pendant la phase de fonctionnement à des intervalles de temps prédéterminés et un signal d'alarme est produit lorsque l'écart du degré de réglage normalisé d'une grandeur de réglage est supérieur, de la valeur 1, à une bande prédéterminée d'alarme.

**10.** Procédé selon la revendication 7, caractérisé en ce que pendant la phase initiale

a) pour le calcul de la valeur moyenne du degré de réglage, une première valeur moyenne est calculée à partir des degrés de réglage de tous les emplacements de régulation d'un groupe;
b) tous les degrés de réglage sont comparés à cette première valeur moyenne;
c) les degrés de réglage, qui sont situés à l'extérieur d'une valeur limite prédéterminée, sont marqués;
d) une seconde valeur moyenne améliorée des degrés de réglage est formée, cette valeur ne prenant pas en compte des degrés de réglage marqués.

**11.** Procédé selon l'une des revendications 1 à 10, caractérisé en ce que dans le cas de fortes variations de paramètres de la machine, tels que la valeur de consigne de la vitesse ou de la température, le contrôle du degré de réglage est supprimé de manière à exclure des fausses alarmes injustifiées.

**12.** Procédé selon l'une des revendications 1 à 11, utilisé dans une machine de traitement de fil, caractérisé en ce que dans le cas d'une rupture du fil au niveau d'un point chaud, le contrôle du degré de réglage de ce point chaud est débranché.

**13.** Procédé selon l'une des revendications 1 à 11, utilisé dans le cas d'une machine de traitement de fil, caractérisé en ce que dans le cas d'un changement de la valeur de consigne de la température ou de la vitesse de la machine, les valeurs de correction de la température et du degré de réglage, qui ont été calculées pendant la phase initiale, sont multipliées par un coefficient de correction, de manière à compenser, au moins en première approximation, une non-linéarité des valeurs de correction de sorte que même dans le cas de variations importantes de la valeur de consigne de la température et/ou de la vitesse de la machine, aucune nouvelle initialisation n'est nécessaire.

**14.** Procédé selon l'une des revendications 1 à 7, caractérisé en ce que pendant la phase de fonctionnement

a) les degrés de réglage des différents emplacements de régulation sont explorés et normalisés, par le fait qu'une première valeur moyenne est calculée à partir des degrés de réglage de tous les emplacements de régulation d'un groupe;
b) tous les degrés de réglage sont comparés à cette première valeur moyenne;
c) les degrés de réglage, qui sont situés à l'extérieur d'une valeur limite prédéterminée, sont marqués;
d) une seconde valeur moyenne améliorée des degrés de réglage est formée, cette valeur ne prenant pas en compte des degrés de réglage marqués,
e) les degrés de réglage sont divisés par la seconde valeur moyenne améliorée et sont ainsi normalisés; et que
f) une bande d'alarme est associée aux degrés de réglage normalisés de chaque emplacement de régulation et un signal d'alarme est produit dès qu'un degré de réglage normalisé dépasse la bande d'alarme.

**15.** Procédé selon la revendication 14, caractérisé en ce que la bande d'alarme est dissymétrique par rapport à la valeur 1.

**16.** Procédé selon l'une des revendications 1 à 15, caractérisé en ce qu'une variation brusque du degré par réglage est affichée en tant que rupture de fil.